Europäisches Patentamt

European Patent Office

Office européen des brevets

(19)

(11) Numéro de publication : **0 300 940 B1**

## (12) FASCICULE DE BREVET EUROPEEN

(45) Date de publication du fascicule du brevet :
02.05.91 Bulletin 91/18

(51) Int. Cl.⁵ : **A22C 17/00, A22B 7/00**

(21) Numéro de dépôt : **88460009.9**

(22) Date de dépôt : **14.06.88**

---

(54) **Procédé et installation de désossage d'un quartier arrière de boucherie.**

---

(30) Priorité : **18.06.87 FR 8708780**

(43) Date de publication de la demande :
**25.01.89 Bulletin 89/04**

(45) Mention de la délivrance du brevet :
**02.05.91 Bulletin 91/18**

(84) Etats contractants désignés :
**AT BE CH DE ES GB GR IT LI LU NL SE**

(56) Documents cités :
**EP-A- 0 121 477**
**EP-A- 0 159 826**
**EP-A- 0 213 015**
**DE-A- 3 011 026**
**FR-A- 1 517 853**
**FR-A- 2 494 960**

(56) Documents cités :
**FR-A- 2 496 405**
**FR-A- 2 513 080**
**FR-A- 2 598 887**
**US-A- 4 651 384**

(73) Titulaire : **S.O.C.O.F. SOCIETE DE CONSEIL EN ORGANISATION ET DE FORMATION**
**Rue du Bignon Immeuble Le Delta Z.I. Sud-Est**
**F-35510 CESSON-SEVIGNE (FR)**

(72) Inventeur : **Rallu, Jean-Claude**
**La Rivière La Chapelle des Fougeretz**
**F-35520 Melesse (FR)**
Inventeur : **Rault, Jean**
**Ty-Jeanie La Chevalerie**
**F-56400 St. Anne d'Auray (FR)**

(74) Mandataire : **Martin, Jean-Jacques et al**
**Cabinet REGIMBEAU 11, rue Franz Heller**
**F-35700 Rennes (FR)**

## Description

La présente invention concerne un procédé de désossage d'un quartier arrière de boucherie ; elle concerne également l'installation destinée à faciliter ce désossage.

Dans les installations traditionnelles de désossage, les quartiers arrière d'animaux de boucherie, tels que les quartiers arrière de bovins par exemple, sont entièrement préparés et désossés à plat sur des supports horizontaux, par des opérateurs qualifiés. Ce travail sur une carcasse à plat est généralement un travail d'excellente qualité qui permet de séparer proprement, pratiquement sans perte, la viande du support osseux ; malheureusement, il s'agit d'un travail relativement lent et de faible rentabilité.

Il a été proposé récemment de découper la viande de boucherie, tout en la désossant, en la maintenant en position suspendue verticale durant toute l'opération de préparation et de désossage ; selon ce procédé, qui est décrit notamment dans le document FR-A-2496405, l'opérateur est assisté mécaniquement ; lorsque l'on a affaire à un quartier arrière, celui-ci est supporté par l'extrémité du tibia, et l'assistance mécanique au désossage est effectuée par un moyen d'accrochage engagé juste au-dessous de l'attache du tendon d'Achille sur la cuisse, ce moyen d'accrochage étant déplacé latéralement de manière à exercer sur la viande un effort d'arrachage sensiblement horizontal. Cette technique permet de travailler à une cadence élevée et d'obtenir un support osseux et une masse de viande tous deux d'un seul tenant. Cependant, elle ne donne pas entière satisfaction, du fait que d'une part certains tissus musculaires consommables directement restent adhérer sur le support osseux après l'arrachage et, d'autre part, certains morceaux de la masse de viande obtenue présentent des déchirures ou autre inégalités de structure qui en déprécient la valeur marchande. Si ces inconvénients sont acceptables dans certains pays où cette viande non présentable en boucherie est ensuite récupérée pour être transformée en viande hachée, ils ne le sont pas dans d'autres pays et notamment en France où la quasi-totalité des morceaux de viande directement commercialisables en l'état doit être séparée du support osseux, et notamment du faux-filet.

La demanderesse a déjà tenté de résoudre ce problème, en proposant une technique de désossage d'un quartier arrière de boucherie qui, de manière générale est intermédiaire entre la technique traditionnelle et celle nouvellement proposée, l'opération se faisant partiellement avec la carcasse à plat (en position horizontale) et partiellement avec la carcasse suspendue (en position verticale), tandis que l'arrachage proprement dit se fait avec la carcasse suspendue (en position verticale).

Cette technique est décrite dans FR-A-2 598 887 (qui n'était pas publiée à la date de priorité de la présente demande).

Malheureusement, si elle constitue un progrès important par rapport à l'art antérieur, sur les plans de la rapidité d'exécution, de la précision et de la rentabilité, l'expérience a montré que cette nouvelle technique était encore perfectible. Il est apparu notamment que certaines opérations n'étaient pas effectuées dans un ordre parfaitement rationnel, et que l'étape intermédiaire de préparation à l'horizontale – qui nécessite l'affalage du quartier sur un support horizontal et son retournement – était relativement longue et constituait un poste d'engorgement qui ralentissait sensiblement la durée totale du désossage.

C'est pourquoi la présente invention vise à perfectionner la technique qui fait l'objet de la demande de brevet précitée.

A cet effet, le procédé qui fait l'objet de l'invention est caractérisé en ce que :
– le quartier se trouvant suspendu à un premier crochet inséré dans la fente séparant le tendon d'Achille du tibia, on incise les tissus musculaires de manière à dégager au moins partiellement l'ischium, l'ilium et le sacrum et on incise l'épine dorsale ;
– on dégage au moins partiellement des morceaux tels que le filet et le merlan, et on relève le quartier – qui se trouve toujours suspendu audit premier crochet – pour le placer dans une position semi-horizontale dans laquelle on scie les côtes et les apophyses transverses des vertèbres lombaires ;
– on suspend le quartier à un second crochet qui est inséré dans une ouverture traversant le tendon d'Achille, on libère le quartier du premier crochet et on sectionne la crosse ;
– on incise les tissus musculaires de manière à lever au moins partiellement – c'est-à-dire sans la détacher complètement – la tranche (terme usuel pour "tende de tranche"), à dégager le tibia, la rotule et le fémur ;
– le quartier étant toujours suspendu audit second crochet, on exerce mécaniquement sur le tibia une traction latérale, durant laquelle on procède à une séparation progressive du support osseux, par découpage de haut en bas des tissus musculaires qui lui sont attenants.

Ces différentes opérations s'enchaînent de façon rationnelle, sans perte de temps, et permettent une séparation excellente des différents morceaux de viande du support osseux, pratiquement sans déchets.

Dans un mode de mise en oeuvre particulièrement intéressant du procédé, l'incision de l'épine dorsale se fait après qu'on ait relevé la partie inférieure du quartier, pour la placer dans une position inclinée, intermédiaire entre la verticale et l'horizontale.

Avantageusement, lors de la levée (partielle ou complète) de la tranche, on exerce mécaniquement sur celle-ci une traction dirigée obliquement, latéralement et vers le haut, ce qui permet de lever la tranche de manière particulièrement rapide, efficace et propre.

Il est possible de procéder à la levée complète ou partielle des bavettes et de l'araignée dès le début du désossage.

Par ailleurs, comme cela a déjà été prévu dans la demande de brevet antérieur précitée, l'effort mécanique de traction exercé sur le tibia, au début de la phase d'arrachage du support osseux, est avantageusement dirigé obliquement, latéralement et vers le bas ; en outre, durant l'arrachage du support osseux, on soutient la masse musculaire du quartier par sa face dorsale, au niveau du sacrum.

L'installation destinée à faciliter le désossage d'un quartier arrière de boucherie, qui fait également l'objet de l'invention, comprend un système de convoyage adapté pour acheminer successivement les quartiers arrière, en position suspendue, à une série de postes de travail, ces derniers comprenant :

– un premier poste de préparation qui est équipé d'un dispositif de contention adapté pour s'appuyer contre la face latérale externe du quartier afin de soutenir celui-ci, dans une position sensiblement verticale, durant le travail ;

– un second poste de préparation qui est équipé d'un dispositif de contention adapté pour soulever le quartier dans une position semi-horizontale, et pour le supporter dans cette position durant le travail ;

– un troisième poste de préparation qui est équipé d'un dispositif de contention adapté pour s'appuyer contre la face latérale externe du quartier afin de soutenir celui-ci, dans une position sensiblement verticale, durant le travail ;

– un quatrième poste d'arrachage du support osseux.

Selon un mode de réalisation préférentiel de cette installation, les dispositifs de contention qui équipent les trois postes de préparation ont la forme générale d'un berceau qui comprend un élément d'appui cintré ou arqué apte à s'appliquer contre la face latérale externe du quartier durant la phase de préparation correspondante, et ce berceau est articulé à sa partie supérieure, son basculement étant commandé par un vérin.

Avantageusement, la partie inférieure du dispositif de contention équipant le premier poste de préparation est elle-même articulée, par rapport à la partie supérieure, cette partie pouvant être soulevée au moyen d'un autre vérin.

La partie inférieure du dispositif de contention équipant le second poste de préparation est pourvue de préférence d'une plaque en tôle apte à supporter le quartier au niveau de la colonne vertébrale (en vue du sciage des côtes).

Avantageusement, le dispositif de contention équipant le troisième poste de préparation, est pourvu de moyens de bridage aptes à s'appliquer contre l'autre face du quartier (face interne), ce qui permet de réaliser la retenue complète du quartier à ce poste.

Le dispositif d'arrachage du support osseux peut être simplement identique à celui décrit dans la demande de brevet précitée, ce dispositif comprenant une pince portée par un parallélogramme déformable actionné par un vérin ; en outre, comme dans cette demande de brevet, il peut être prévu au poste d'arrachage un moyen d'appui apte à venir s'appliquer au niveau du sacrum, au cours de l'arrachement du support osseux.

Dans le mode de réalisation préférentiel de l'invention, le système de convoyage comprend une voie de roulement aérienne constituée d'une paire de rails légèrement inclinés par rapport à l'horizontale, et les quartiers sont suspendus à des crochets à roulettes qui peuvent se déplacer simplement par gravité le long desdits rails.

Il est prévu, par ailleurs, que la voie de roulement aérienne présente une interruption située au troisième poste de préparation, cette interruption correspondant à un rehaussement du niveau des rails ; un tronçon de rails pivotant permet de transférer les quartiers sur la voie de roulement (d'amont en aval) à ce poste, en modifiant, comme on le verra plus loin, la zone et le mode d'accrochage du quartier au crochet.

D'autres caractéristiques et avantages de l'invention apparaîtront de la description et des dessins annexés qui en présentent un mode de réalisation préférentiel.

Sur ces dessins :

– la figure 1 est une vue de face schématique du premier poste de préparation (I) auquel arrive un quartier arrière de bovin en position suspendue ;

– la figure 2 est une vue de côté du poste de la figure 1 ;

– la figure 3 est une vue analogue à celle de la figure 2, montrant la position du quartier de bovin au cours de l'opération éxecutée au poste 1 ;

– la figure 4 est une vue de face schématique du second poste de préparation ;

– la figure 5 est une vue de côté du poste de la figure 4 ;

– la figure 5A est une vue de détail, à échelle légèrement agrandie, qui correspond au plan de coupe (A) de la figure 5 ;

– la figure 6 est une vue de face schématique du troisième poste de préparation ;

– la figure 7 est une vue de côté du poste de la figure 6 ;

– les figures 8 et 9 sont des vues de détail, à échelle légèrement agrandie, du dispositif de la figure 7 vu de dessus respectivement par les plans (VIII) et (IX) ;
– la figure 10 est vue de face schématique du poste d'arrachage du support osseux ;
– les figures 11, 12 et 13 sont des vues de détail, à échelle agrandie, qui illustrent l'opération de transfert du quartier d'un crochet à un autre, au troisième poste de préparation, où la voie de roulement est interrompue ;
– les figures 14, 15 et 16 sont des vues schématiques de la face latérale interne d'un quartier de bovin, ces vues illustrant les différentes opérations de préparation constitutives du procédé selon l'invention ;
– la figure 14A est une vue schématique de la face dorsale du quartier de bovin, destinée à illustrer une opération réalisée au premier poste de préparation.

L'exemple représenté sur les figures concerne le désossage d'un quartier arrière de bovin et plus particulièrement de boeuf ; le quartier (Q) représenté est un quartier communément désigné par "ART 8" (arrière traité huit côtes) ce quartier (Q) comprend la cuisse, les bavettes, l'aloyau, et le milieu de train de côtes du boeuf.

Le quartier (Q) est suspendu à un crochet 6 inséré dans la fente séparant le tendon d'Achille du tibia. Le crochet 6 est porté par une paire de galets 60 adaptés pour circuler sur une voie de roulement aérienne constituée d'une paire de rails 5 ; ceux-ci sont supportés, de manière connue, par des chaises appropriées 50 fixées à une structure aérienne 7 ou au plafond.

Les rails 5 ont une légère inclinaison par rapport à l'horizontale, de sorte que les crochets à roulettes circulent par simple gravité sur sa voie de roulement; des butées d'arrêt escamotables 51, de type connu, permettent d'arrêter en certains endroits de la voie les crochets 6 (ainsi que les quartiers (Q) qu'ils supportent) puis de les laisser passer, permettant leur transfert au fur et à mesure que se déroulent les opérations de préparation des quartiers ; l'escamotage des butées d'arrêt 51 peut se faire soit de manière manuelle, soit de manière automatique, grâce à des organes de commande non représentés dont la conception et la réalisation sont à la portée de l'homme du métier.

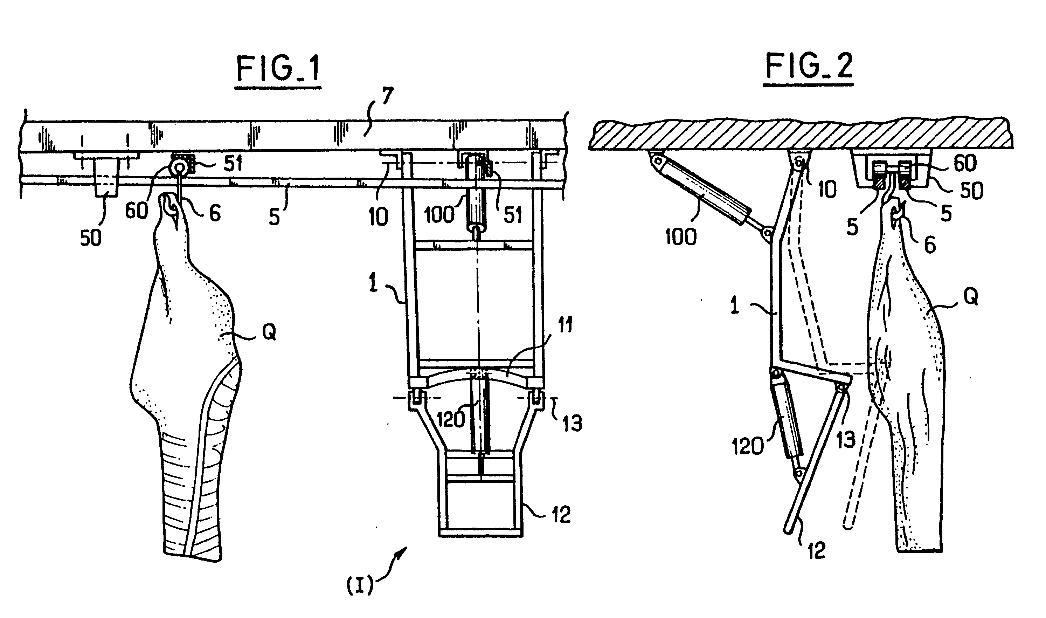

Le premier poste (I) de préparation, représenté sur les figures 1, 2 et 3, est équipé d'un dispositif de contention 1 apte à venir s'appuyer contre la face latérale externe du quartier (Q) afin de soutenir celui-ci dans une position sensiblement verticale. Ce dispositif a la forme générale d'un berceau, qui est articulé à la structure 7 autour d'un axe longitudinal 10 (parallèle à la voie de roulement 5). Un vérin 100 – pneumatique ou hydraulique – permet de faire basculer le berceau 1 autour de l'axe 10 ; quand le vérin 100 est rétracté, ce berceau se trouve dans une position escamotée dans laquelle il laisse passer librement le quartier (Q) (position en traits forts à la figure 2) ; quand le vérin 100 se trouve en position d'extension, le berceau 1 vient s'appliquer, grâce à une barre cintrée 11 de configuration appropriée, contre la partie supérieure de la cuisse du quartier (Q) (position représentée en traits interrompus à la figure 2).

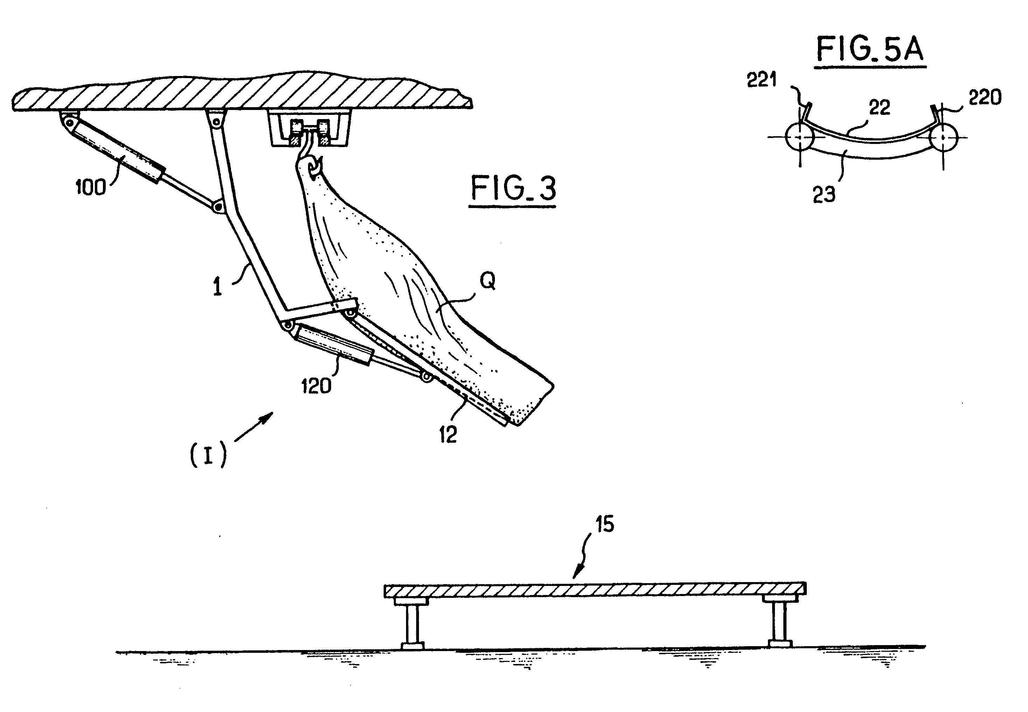

La partie inférieure 12 du berceau 1 est elle-même articulée, autour d'un axe 13, à la partie supérieure, et il est possible de faire basculer cette partie 12 au moyen d'un vérin 120. Comme on le voit clairement à la figure 3, lorsque le vérin 120 se trouve en position d'extension, la partie inférieure de berceau 12 permet de relever toute la partie inférieure (c'est-à-dire la partie dorsale) du quartier (Q). Comme on le verra ultérieurement, ce relevage partiel du quartier favorise l'opération d'incision de l'épine dorsale.

On notera, par ailleurs, qu'au niveau de l'axe central du berceau 1 se trouve une butée d'arrêt 51, ce qui permet de provoquer l'arrêt automatique de chacun des quartiers (Q) juste en face du berceau ; il en est de même à chacun des autres postes composant l'installation.

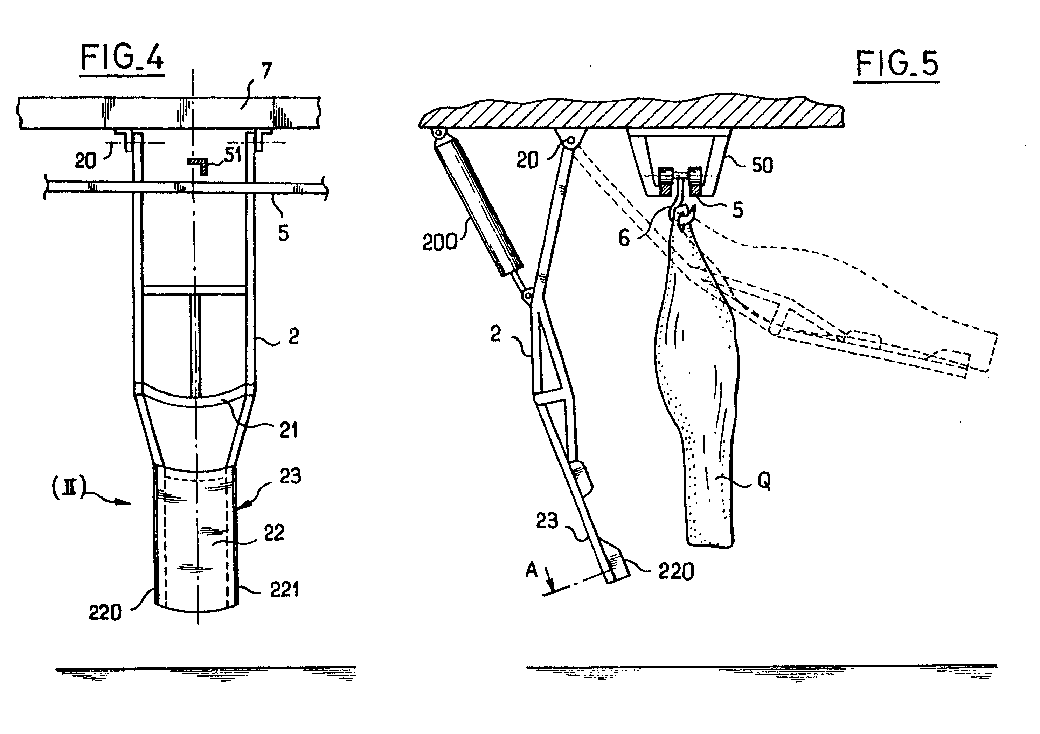

Le second poste de préparation (II), représenté aux figures 4, 5 et 5A, est similaire au poste 1, en ce sens qu'il est équipé d'un dispositif 2 ayant la forme d'un berceau articulé à la structure aérienne 7 au moyen d'un axe 20 ; le berceau 2 a une longueur légèrement inférieure à celle du quartier (Q) ; il possède un arceau cintré 21 conformé pour s'appuyer contre la partie supérieure de la cuisse du quartier ; sa partie inférieure 23 est munie d'une plaque de tôle 22, de forme légèrement arquée, comme on le voit en particulier à la figure 5A ; de plus, la plaque 22 a des bords d'extrémité 220, 221 relevés à angle droit, ce qui permet une retenue latérale de la partie inférieure du quartier (partie dorsale), lorsque la plaque 22 vient s'appliquer contre celle-ci.

Le basculement du berceau 2 est commandé par un vérin 200 ; l'extension de ce vérin permet d'obtenir un relevage, dans une position semi-horizontale (c'est-à-dire peu inclinée par rapport à l'horizontale), cette position étant représentée en traits interrompus à la figure 5.

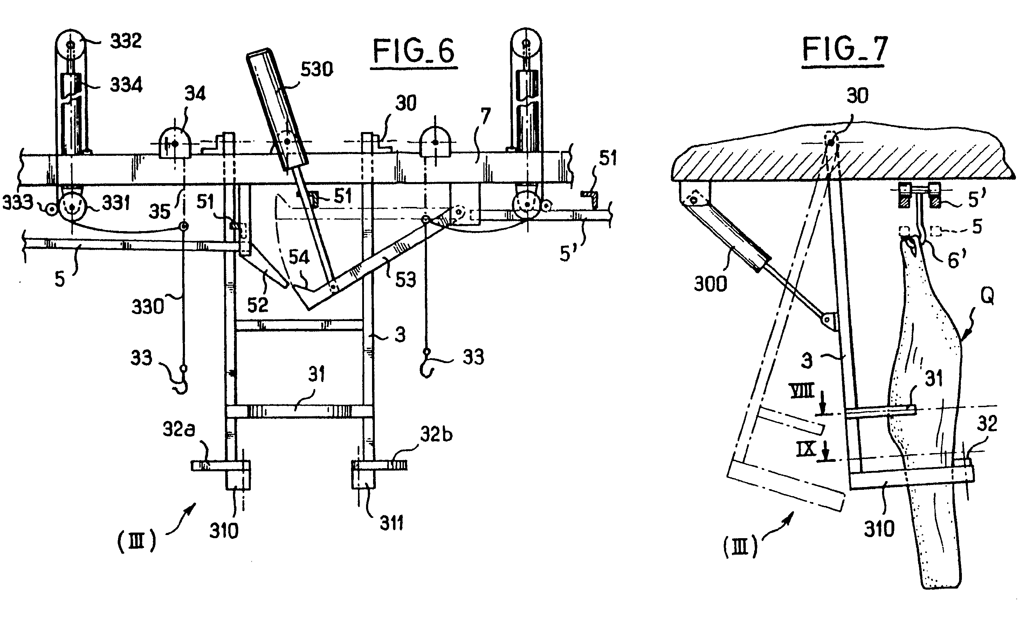

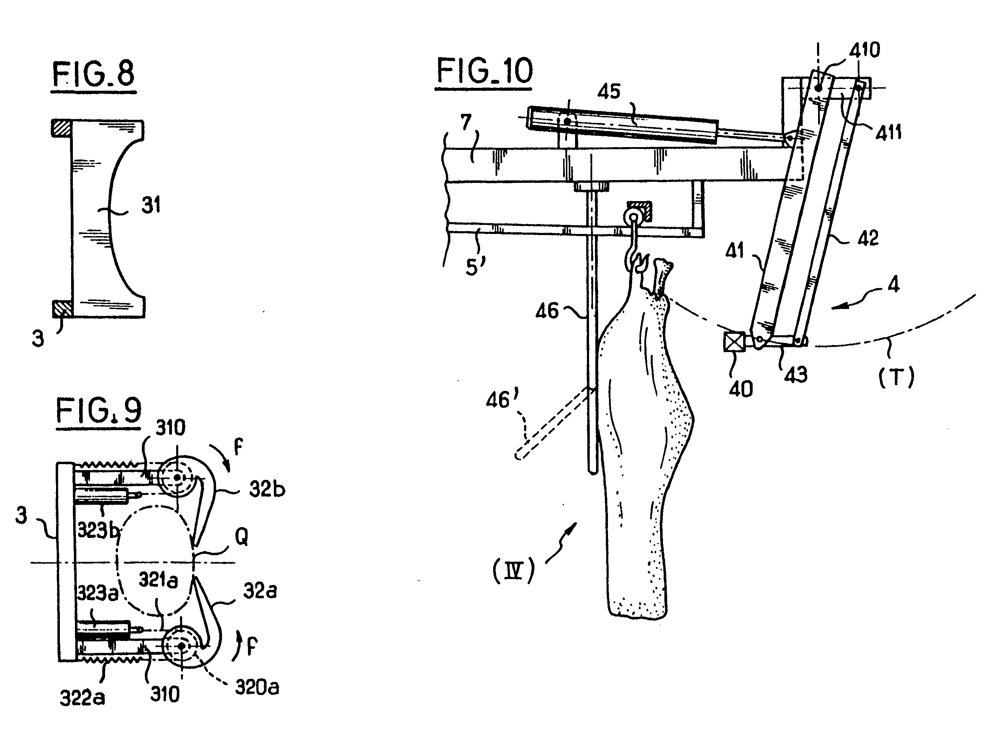

Les figures 6 et 7 représentent le troisième poste (III) de préparation. Celui-ci est équipé, comme les postes précédents, d'une structure articulée 3 en forme de berceau, pouvant basculer autour d'un axe longitudinal 30 ; le mouvement de basculement du berceau 3 est commandé par un vérin 300 ; le berceau 3 est muni d'une plaque d'appui 31 présentant un bord arqué apte à s'adapter contre la face latérale externe du quartier (voir figure 8).

Au-dessous du niveau de la plaque 31, sont prévus une paire d'organes de bridage pivotants 32a, 32b qui peuvent être basculés vers l'extérieur (position de la figure 6) pour permettre la mise en place et l'enlèvement du quartier dans le berceau, contre la plaque 31, ou au contraire vers l'intérieur (position de la figure 9) afin de retenir le quartier (Q) parfaitement immobile dans le berceau, en s'appliquant contre la face opposée de ce quartier ; à la figure 9, le quartier (Q) a été représenté en traits mixtes interrompus.

Les organes de commande du basculement des organes de bridage 32a, 32b comprennent par exemple un pignon 320 solidaire en rotation de l'organe associé 32, l'ensemble étant articulé dans un bras 310 porté par le berceau 3 ; une chaîne 321 s'enroulant sur le pignon 320 est solidaire par une extrémité de la tige d'un vérin de commande 323, et par son autre extrémité d'un ressort de traction 322 ; le ressort 322 tend constamment à déplacer la chaîne pour faire pivoter le pignon 320, et corrélativement l'organe de bridage 32 associé, dans le sens de son ouverture, en provoquant l'extension du vérin ; lorsqu'on souhaite refermer les organes de bridage 32 sur le quartier (Q) (mouvement pivotant figuré par les flèches f à la figure 9), il suffit de provoquer la rétraction des vérins 323, comme on le comprend aisément à l'observation de la figure 9 ; inversement, la mise en extension des vérins 323 permet au ressort 322 de provoquer le pivotement des organes de bridage 32 en sens inverse des flèches (f), provoquant leur ouverture et leur escamotage sur le côté.

Au poste (III) on a réalisé un rehaussement du niveau des rails 5, afin d'éviter, qu'en raison de leur inclinaison, les quartiers (Q) n'arrivent à un niveau trop bas dans la partie aval de l'installation ; on a désigné par 5′ les rails surélevés, en aval de l'interruption ; cette interruption est matérialisée par un tronçon de rails pivotant 53, dont le pivotement est commandé par un vérin 530 ; dans sa position basse (position représentée en traits forts à la figure 6), le tronçon 53 est adapté pour recueillir les crochets roulants provenant de la partie amont de la voie de roulement 5, après escamotage de la butée 51 située à l'extrémité de cette partie ; ce transfert est facilité par des organes de guidage appropriés 52, 54 prévus respectivement sur les rails 5 et 53. En position relevée (en traits mixtes à la figure 6), le tronçon 53 se trouve dans le prolongement des rails 5′.

De chaque côté du dispositif de contention 3, est prévu un système de traction qui est destiné à faciliter soit la levée partielle, c'est-à-dire le décollement, soit la levée complète de la tranche, en assistant mécaniquement l'opérateur.

Ces deux dispositifs sont identiques, disposés symétriquement par rapport au berceau 3. Selon que l'on a affaire à un quartier (Q) gauche ou droit, on utilise l'un ou l'autre des deux systèmes pour faciliter le décollement de la tranche.

Chacun de ces deux systèmes comporte un crochet 33 adapté pour être enfoncé dans la tranche, ce crochet étant fixé à l'extrémité d'un câble de traction 330. Ce dernier est fixé à la structure aérienne 7 par son autre extrémité, après passage sur des galets ou rouleaux de renvoi 333, 331, 332 ; ce dernier est porté par la tige de commande d'un vérin 334 également fixé à la structure 7. Pour éviter que, en période de non utilisation, le crochet 33 ne soit placé à un niveau trop bas, l'extrémité du câble 333 portant ce crochet est suspendue par un fil 35 à un enrouleur 34 de type connu, porté par la structure 7.

Comme on le comprend aisément à l'observation de la figure 6, lorsqu'on provoque l'extension du vérin 334, ce dernier provoque la remontée de la roue de renvoi 332, ce qui réalise la traction du câble dans le cas où le crochet 33 a été préalablement accroché au quartier (Q) présent à l'intérieur du berceau 3 ; cette traction n'est pas contrariée par le fil 35 car la force de l'enrouleur 34 est négligeable par rapport à l'effort de traction ; ce dernier va être par conséquent dirigé obliquement latéralement et vers le haut.

Le poste d'arrachage du support osseux (IV), représenté à la figure 10, est équipé d'un dispositif d'arrachage similaire à celui qui a été décrit dans la demande de brevet n° 86 07439 dont il a été fait état plus haut. C'est pourquoi, pour ne pas alourdir inutilement la présente description, ce dispositif sera décrit ici assez sommairement ; il convient de se reporter à cette demande antérieure, pour comprendre la structure et le fonctionnement détaillés de ce dispositif.

Le dispositif d'arrachage 4 comprend un bras mécanique articulé et un moyen d'appui du quartier au cours de l'arrachage.

Le bras mécanique 4 est constitué d'un levier principal 41 articulé autour d'un axe transversal fixe 410 à un support fixe 411 porté par la structure aérienne 7. Il comprend également un levier secondaire 42 qui est relié au bras 41 par une paire de biellettes 411, 43, la biellette supérieure 411 correspondant au support précité et étant par conséquent fixe. La biellette 43 porte une pince généralement désignée par la référence 40 et comprenant une paire de machoires dont l'ouverture et la fermeture sont commandées par un vérin pneumatique non représenté. Le bras mécanique a donc la forme d'un parallèlogramme déformable ; le pivotement du bras 41 autour de l'axe 410 est commandé par un vérin pneumatique 45 articulé sur la structure 7.

En fait, comme cela est expliqué clairement dans la demande antérieure précitée, le levier secondaire 42 est constitué de deux parties télescopiques mobiles élastiquement l'une par rapport à l'autre.

Le moyen d'appui 46 est constitué d'une barre verticale guidée en rotation autour de son propre axe dans un palier approprié formé dans la structure aérienne 7, cette barre portant à son extrémité inférieure une barre 46′ légèrement inclinée par rapport à l'horizontale ; un vérin rotatif approprié (non représenté) permet de faire tourner sur elle-même la barre 46, sur une course angulaire de l'ordre de 90°, de sorte que la barre d'appui peut se placer dans un plan vertical qui est disposé soit perpendiculaire à la voie de roulement 5', soit parallèlement à celle-ci. Au poste (IV), peuvent être également prévus des moyens d'évacuation du support osseux après son arrachement, ces moyens pouvant avantageusement être associés avec un dispositif de sectionnement du support osseux.

Lorsque le vérin 45 se trouve dans sa position rétractée extrême, la pince 40 se trouve au voisinage du crochet 6 supportant le quartier (Q), alors que celui-ci est en appui contre la barre 46. Au cours de l'extension du vérin 45, la machoire 40 va décrire une trajectoire (T) sensiblement circulaire (centrée sur l'axe 410), le début de l'arrachement se faisant donc selon une direction oblique, tournée latéralement et vers le bas.

Il va de soi que chacun des vérins de commande se trouvant aux postes (I), (II), (III) et (IV), est alimenté en fluide hydraulique ou pneumatique par une source sous pression appropriée, et que le poste correspondant est muni d'organes de pilotage de ces vérins, par exemple sous forme de manettes, qui sont accessibles aux opérateurs travaillant à ces postes. Ces moyens, qui sont connus en soi, n'ont pas été représentés sur les figures, dans un seul but de simplification. Il en est de même pour les moyens de commande des butées d'arrêt 51, dont le pilotage dans le sens de l'escamotage ou, au contraire, de la mise en position active (position d'arrêt) permet aux opérateurs de faire avancer les quartiers (Q) dans l'installation, au rythme des opérations réalisées dans chacun des postes.

Nous allons maintenant expliquer de quelle manière l'installation qui vient d'être décrite est utilisée pour le désossage d'un quartier arrière (Q).

Le vérin 100 se trouvant en position rétractée, et le berceau 1 en position escamotée (traits forts, figure 2), l'opérateur travaillant au poste de préparation (I) escamote la butée d'arrêt 51 se trouvant en aval du berceau 1, de manière à amener par gravité un quartier (Q) contre le butée d'arrêt suivante, qui se trouve exactement au droit du berceau 1.

Chacun des quartiers (Q) est suspendu à un crochet 6, ce dernier ayant été préalablement inséré dans la fente qui sépare le tendon d'Achille du tibia.

L'opérateur du poste (I), par manoeuvre de l'organe de commande prévu à cet effet, provoque l'extension du vérin 100 pour amener l'élément d'appui 11 en contact avec la face latérale externe du quartier (Q), au niveau de la partie supérieure de la cuisse (position représentée en traits interrompus, figure 2).

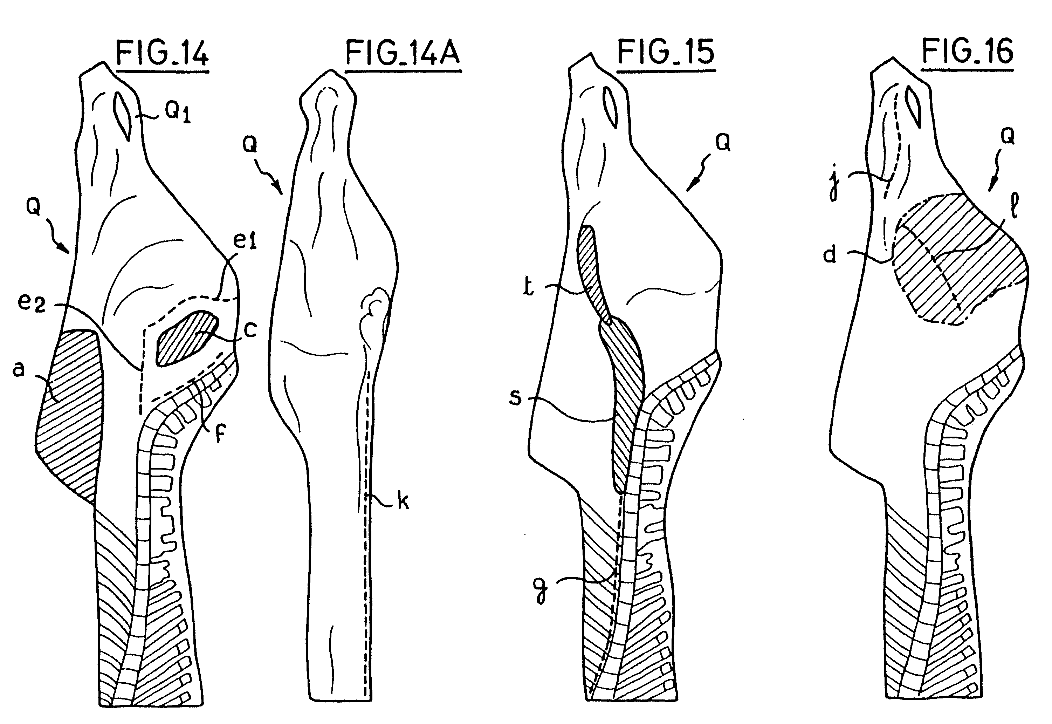

Au poste (I), l'opérateur, à l'aide d'un couteau, procède aux opérations suivantes, qui sont illustrées à la figure 14 :
- il enlève les bavettes (a) et l'araignée (c) ;
- il incise les tissus musculaires, de manière à dégager au moins partiellement l'ischium, l'ilium, et le sacrum ; les incisions correspondantes étant représentées à la figure 14 par les lignes pointillées (e1, e2) et (f), respectivement.

Il provoque ensuite la mise en extension du vérin secondaire 120, de telle manière que la partie inférieure 12 du berceau 1 provoque le relevage de la partie inférieure, c'est-à-dire de la partie dorsale du quartier (Q) ; dans cette position, qui est représentée à la figure 3, l'opérateur va tracer, c'est-à-dire inciser l'épine dorsale ; la position inclinée du quartier favorise beaucoup cette opération, qui est figurée par la ligne (k) à la figure 14A. On notera qu'il est possible de prévoir à ce poste un support 15, avantageusement réglable en hauteur, sur lequel l'opérateur peut monter.

Dans sa position relevée de la figure 3, la partie inférieure de berceau 12 forme avec l'horizontale un angle qui est avantageusement compris entre 30 et 60°, par exemple de 40°.

Ces opérations étant terminées, l'opérateur va piloter la rétraction des vérins 120 et 100, de sorte que le quartier (Q) peut être transféré au poste (II) suivant.

Le quartier (Q) étant arrivé au poste (II), l'opérateur qui s'y trouve commence par dégager et éventuellement enlever des morceaux tels que le merlan et le filet, morceaux désignés respectivement par (t) et (s) à la figure 15.

Ensuite l'opérateur provoque le relèvement du berceau 2, en pilotant l'extension du vérin 200, jusqu'à ce que le quartier (Q) prenne un position semi-horizontale ; par "semi-horizontale" on entend une position qui est proche de l'horizontale, par exemple inclinée d'un angle de 10 à 30° par rapport à l'horizontale.

Dans cette position, toute la partie inférieure, c'est-à-dire la partie dorsale du quartier (Q) est supportée par la plaque de tôle 22, encastrée entre les côtés relevés 220, 221 de cette plaque. Ainsi le quartier se trouve parfaitement immobilisé dans le berceau 2 qui se supporte.

Dans cette position favorable et sûre, l'opérateur effectue le sciage des côtes, figuré par la ligne (g) à la figure 15, et le sciage des apophyses transverses des vertèbres lombaires.

Ensuite, après rétraction du vérin 200 et escamotage du berceau 2, le quartier (Q) est transféré au poste (III) suivant.

Au poste (III), l'opérateur va commencer par transférer le quartier (Q) du crochet 6, auquel il est suspendu, à un autre crochet vide, qui est porté par le tronçon 53, celui-ci se trouvant en position basse.

On va, en effet, profiter du relevage du quartier de la voie aérienne 5 à la voie aérienne 5', située plus haut, pour modifier le mode d'accrochage du quartier.

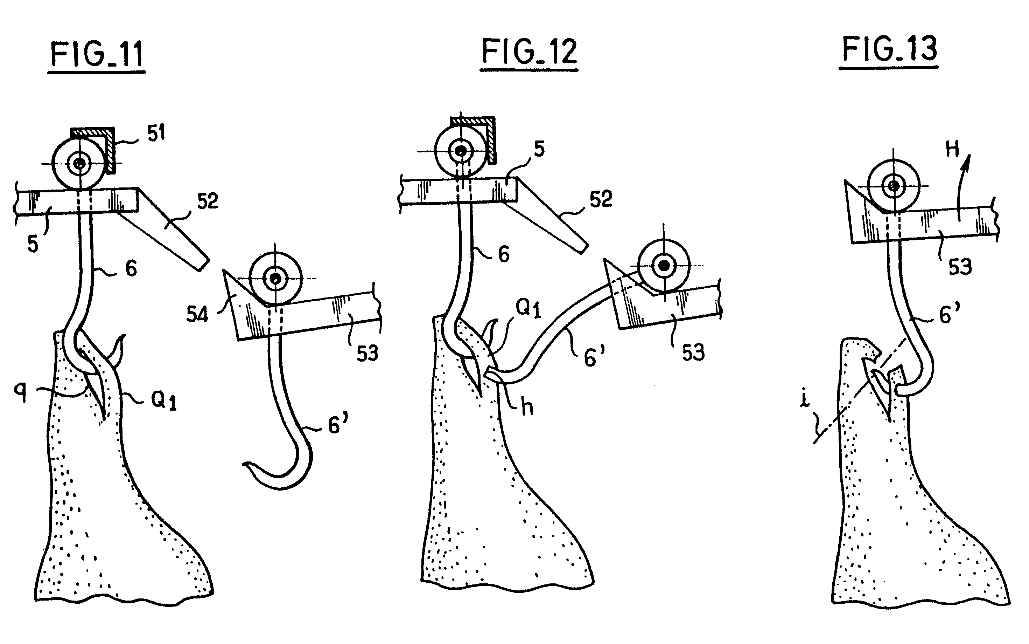

Ce transfert est illustré par les figures 11, 12 et 13.

Comme on l'a dit plus haut, le crochet 6 se trouve à l'intérieur de la fente (q) qui sépare le tendon d'Achille (Q1) du tibia.

Pour arracher ultérieurement le tibia, à l'aide du dispositif d'arrachage situé au poste (IV), il est nécessaire que l'extrémité du tibia soit libre, l'accrochage se faisant par le tendon d'Achille. C'est pourquoi le crochet 6 auquel est suspendu le quartier se trouvant en butée contre l'organe 51 prévu à l'extrémité de la voie de roulement 5, l'opérateur va rapprocher l'extrémité du crochet libre 6' (porté par le tronçon 53) du tendon d'Achille (Q1), et l'enfoncer dans celui-ci par une ouverture (h). L'opérateur provoque alors le relevage du tronçon de rails 53, ce qui provoque la remontée du crochet 6' au niveau de la seconde partie 5' de la voie de roulement. Ensuite, il dégage le crochet 6 et sectionne, par exemple à l'aide d'une cisaille pneumatique ou hydraulique - la crosse du tendon d'Achille ; ce sectionnement est figuré par la ligne (i) à la figure 13. Le quartier (Q) se trouve alors libéré du premier crochet 6 et suspendu au second crochet 6', par le tendon d'Achille.

Ce transfert ayant été réalisé, l'opérateur du poste (III) va piloter l'extension du vérin 300 pour amener l'élément 31 en appui contre le quartier (Q) et avantageusement pour soulever légèrement celui-ci ; ce soulèvement correspond à un angle de quelques degrés, par exemple de 5 à 10°, par rapport à la verticale.

Par pilotage des vérins 323a et 323b, l'opérateur commande également la fermeture des organes de bridage 32a, 32b, de manière à emprisonner complètement le quartier (Q) à l'intérieur du berceau 3.

L'opérateur va alors procéder à la levée partielle de la tranche – référencée (d) à la figure 16 –, à l'aide d'un couteau.

Pour cela, il se saisit du crochet 33 qui se trouve du même côté que la tranche du quartier auquel il a affaire, et l'enfonce dans la tranche. Il pilote alors l'extension du vérin correspondant 334, ce qui provoque la tension du câble 330, ce dernier exerçant une traction latérale oblique dirigée vers le haut, qui facilite le décollement de la tranche, ce décollement se faisant manuellement au couteau sous l'assistance mécanique du système de traction.

Ensuite l'opérateur va inciser, à l'aide d'un couteau, les tissus musculaires de manière à dégager le tibia (ligne d, figure 16), la rotule et le fémur (ligne 1).

Lorsque cette opération est terminée, l'opérateur provoque l'escamotage des organes de bridage 32 et celle du berceau 3.

L'opération étant terminée au poste (III), l'opérateur provoque l'escamotage de la butée d'arrêt 51 située dans l'axe du berceau 3, de sorte que le quartier (Q) est évacué vers le poste suivant d'arrachage (IV) ; ensuite, il provoque l'abaissement du tronçon de rail 53, et l'escamotage de la butée d'arrêt 51 située à l'extrémité de la voie de roulement 5, ce qui permet au crochet vide se trouvant à l'extrémité de la voie 5, d'être transféré sur tronçon 53 (grâce aux éléments de guidage 52, 54) ; ce crochet est donc prêt à recevoir le prochain quartier (Q) arrivant au poste (III).

Au poste (IV), l'opérateur va faire tourner la barre d'appui 46, pour l'amener contre le sacrum du quartier (Q) ; ensuite, il rétracte le vérin 45 pour amener la pince 40 à proximité du tibia, positionne les machoires autour de celui-ci et provoque leur fermeture. Il actionne ensuite le vérin 45 dans le sens de son extension, ce qui provoque le déplacement de la pince 40 suivant une direction oblique vers le bas et latéralement, comme cela a été expliqué en détail dans la demande antérieure précitée.

Au fur et à mesure que le tibia et le reste du support osseux sont arrachés, l'opérateur suit la progression du travail en procédant, à l'aide du couteau, au désossage manuel de l'articulation du tibia et du fémur, au désossage du fémur, au désossage de l'ischium, de l'ilium et du sacrum. Il contourne les apophyses articulaires des vertèbres lombaires puis dorsales, et enfin décroche le support osseux du reste de la viande.

A la fin de l'arrachage du support osseux, ce dernier est évacué ; sur le crochet 6' reste suspendue, d'un seul tenant, toute la masse musculaire du quartier arrière, retenue par le tendon d'Achille (Q1) ; il suffit alors d'escamoter la barre d'appui 46 et la butée d'arrêt 51 du poste 4, pour transférer la viande – toujours en position verticale suspendue – soit dans un autre atelier, soit au poste suivant de finition, de dégraissage, et de parage.

L'expérience a montré que l'ensemble du support osseux enlevé était propre, pratiquement dépourvu de toute viande, tandis que le morceau de viande obtenu était en excellent état, près à la découpe de détail ou de semi-détail.

Le procédé qui vient d'être décrit permet de travailler avec une très grande rapidité, et un synchronisme parfait entre chacun des postes.

Il va de soi que la présente invention n'est pas limitée au seul mode de réalisation préférentiel qui vient d'être décrit à simple titre d'exemple ; elle en englobe, au contraire, toutes les variantes.

C'est ainsi, par exemple, que la voie de roulement aérienne pourrait être un rail unique (monorail) et non une paire de rails.

Par ailleurs, l'organe de guidage 52 facilitant le transfert des crochets de la voie 5 au tronçon pivotant 53 pourrait être remplacé par des éléments souples rétractables (câbles ou chaînes) assurant la continuité du roulement.

## Revendications

1. Procédé de désossage d'un quartier arrière de boucherie, selon lequel :
   – le quartier (Q) se trouvant suspendu à un premier crochet (6) inséré dans la fente (q) séparant le tendon d'Achille (Q1) du tibia, on incise les tissus musculaires de manière à dégager au moins partiellement l'ischium (e1), l'ilium (e2) et le sacrum (f) et on incise l'épine dorsale (k) ;

— on dégage au moins partiellement des morceaux tels que le filet (s) et le merlan (t), et on relève le quartier – qui se trouve toujours suspendu audit premier crochet (6) – pour le placer dans une position semi-horizontale dans laquelle on scie les côtes (g) et les apophyses transverses des vertèbres lombaires ;

— on suspend le quartier à un second crochet (6') qui est inséré dans une ouverture (h) traversant le tendon d'Achille, on libère le quartier du premier crochet et on sectionne la crosse (i) ;

— on incise les tissus musculaires de manière à lever au moins partiellement la tranche (d) et à dégager le tibia (j), la rotule et le fémur (1) ;

— le quartier étant toujours suspendu audit second crochet, on exerce mécaniquement sur le tibia une traction latérale, durant laquelle on procède à une séparation progressive du support osseux, par découpage de haut en bas des tissus musculaires qui lui sont attenants.

2. Procédé selon la revendication 1, caractérisé par le fait que l'incision de l'épine dorsale se fait après qu'on ait relevé la partie inférieure du quartier, pour la placer dans une position inclinée, intermédiaire entre la verticale et l'horizontale.

3. Procédé selon l'une des revendications 1 ou 2, caractérisé par le fait que lors de la levée partielle ou complète de la tranche (d), on exerce mécaniquement sur celle-ci une traction dirigée obliquement, latéralement et vers le haut.

4. Procédé selon l'une des revendications 1 à 3, caractérisé par le fait qu'au tout début du désossage, on lève les bavettes (a) et l'araignée (c), complètement ou partiellement.

5. Procédé selon l'une des revendications 1 à 4, caractérisé par le fait qu'au cours de l'arrachage du support osseux, on soutient la masse musculaire du quartier par sa face dorsale, au niveau du sacrum.

6. Procédé selon l'une des revendications 1 à 5, caractérisé par le fait que l'effort mécanique de traction exercé sur le tibia au début de la phase d'arrachage du support osseux est dirigé obliquement, latéralement et vers le bas.

7. Installation destinée à faciliter le désossage d'un quartier arrière de boucherie, caractérisée par le fait qu'elle comprend un système de convoyage adapté pour acheminer successivement les quartiers arrière (Q) en position suspendue à une série de postes de travail, ces derniers comprenant :

— un premier poste de préparation (I) qui est équipé d'un dispositif de contention (1) adapté pour s'appuyer contre la face latérale externe du quartier (Q) afin de soutenir celui-ci, dans une position sensiblement verticale, durant le travail ;

— un second poste de préparation (II) qui est équipé d'un dispositif de contention (2) adapté pour soulever le quartier (Q) dans une position semi-horizontale, et pour le supporter dans cette position durant le travail ;

— un troisième poste de préparation (III) qui est équipé d'un dispositif de contention (3) adapté pour s'appuyer contre la face latérale externe du quartier (Q) afin de soutenir celui-ci, dans une position sensiblement verticale, durant le travail ;

— un quatrième poste (IV) d'arrachage du support osseux.

8. Installation selon le revendication 7, caractérisée par le fait que le dispositif de contention (1) qui équipe le premier poste de préparation (I) a la forme générale d'un berceau comprenant une barre d'appui cintrée (11) apte à s'appliquer contre la partie supérieure de la cuisse du quartier (a).

9. Installation selon la revendication 8, caractérisée par le fait que le dispositif de contention (1) en forme de berceau est articulé, son basculement étant commandé par un vérin (100).

10. Installation selon la revendication 9, caractérisée par le fait que la partie inférieure (12) du dispositif de contention (1) est elle-même articulée par rapport à la partie supérieure, cette partie pouvant être soulevée au moyen d'un vérin (120).

11. Installation selon l'une des revendications 7 à 10, caractérisée par le fait que le dispositif de contention (2) équipant le second poste de préparation (II) a la forme générale d'un berceau articulé (2), dont le mouvement de soulèvement est commandé par un vérin (200).

12. Installation selon la revendication 11, caractérisée par le fait que la partie inférieure (23) du dispositif de contention (2) est pourvue d'une plaque en tôle (22) apte à supporter le quartier (Q) au niveau de la colonne vertébrale.

13. Installation selon l'une des revendications 7 à 11, caractérisée par le fait que le dispositif de contention (3) équipant le troisième poste de préparation (III) a la forme générale d'un berceau articulé (3), dont le mouvement de pivotement est commandé par un vérin (300).

14. Installation selon la revendication 13, caractérisée par le fait que le dispositif de contention (3) comprend un élément d'appui arqué (31) apte à s'appliquer contre la paroi supérieure de la cuisse du quartier (Q) et des moyens de bridage aptes à s'appliquer contre l'autre face du quartier (face interne).

15. Installation selon la revendication 14, caractérisée par le fait que les moyens de bridage sont des organes pivotants (32) actionnés par vérins (323).

16. Installation selon l'une des revendications 7 à 15, caractérisée par le fait que le poste d'arrachage (IV) du support osseux est équipé d'un dispositif d'arrachage (4) qui comprend une pince (40) portée par un parallélogramme déformable (41-42-43-410) et actionnée par un vérin (45).

17. Installation selon la revendication 16, caractérisé par le fait que le poste d'arrachage (IV) est équipé d'un moyen d'appui (46) apte à venir s'appliquer au niveau du sacrum du quartier (Q) au cours de l'arrachement du support osseux.

18. Installation selon l'une des revendications 7 à 17, caractérisée par le fait que le système de convoyage comporte une voie de roulement aérienne comprenant au moins un rail, par exemple une paire de rails (5) légèrement inclinés par rapport à l'horizontale, les quartiers (Q) étant suspendus à des crochets à roulettes (6) pouvant se déplacer par gravité le long desdits rails (5).

19. Installation selon la revendication 18, caractérisée par le fait que la voie de roulement aérienne présente une interruption située au troisième poste de préparation (III), cette interruption correspondant à un rehaussement du niveau des rails (5), un tronçon de rails pivotant (53) permettant de transférer les quartiers (Q) sur la voie de roulement à ce poste.

**Ansprüche**

1. Verfahren zum Ausbeinen eines Schlachthinterteils demzufolge :

– man, während das Teil (Q) an einem ersten Haken (6), der in dem Spalt (q), der die Achillessehne (Q1) vom Schienbein trennt, eingehängt ist, das Muskelgewebe derart einschneidet, daß man wenigstens teilweise das Sitzbein (e1), das Ilium (e2) und das Kreuzbein (f) auslöst, und man das Rückgrat (k) einschneidet ;

– man wenigstens teilweise Teile wie das Filet (s) und das Merlan (t) auslöst und man das Teil hochhebt, das sich noch immer am ersten Haken (6) aufgehängt befindet, um es in einer halb horizontalen Stellung anzuordnen, in der man die Rippen (g) und die transversalen Knochenfortsätze der Rückenwirbel abschneidet ;

– man das Teil an einem zweiten Haken (6') aufhängt, der in eine Öffnung (h) eingehängt wird, die die Achillessehne durchquert, man das Teil von dem ersten Haken löst und den Aortenbogen (i) durchschneidet ;

– man das Muskelgewebe so schneidet, daß man wenigsten teilweise das Mittelschwanzstück (d) anhebt und das Schienbein (j), die Kniescheibe und den Oberschenkelknochen (1) auslöst ;

– man, während das Teil immer noch am zweiten Haken aufgehängt ist, mechanisch auf das Schienbein einen lateralen Zug ausübt, währenddessen man mit einer zunehmenden Abtrennung des Knochengerüsts fortschreitet, indem man das an ihm hängende Muskelgewebe von oben nach unten abschneidet.

2. Verfahren nach Anspruch 1, gekennzeichnet durch die Tatsache, daß das Einschneiden des Rückgrats durchgeführt wird, nachdem man den unteren Teil des Teils angehoben hat, um das Rückgrat in eine geneigte Stellung zu bringen, die zwischen der vertikalen und der horizontalen liegt.

3. Verfahren nach einem der Ansprüche 1 oder 2, gekennzeichnet durch die Tatsache, daß man beim teilweisen oder vollständigen Anheben des Mittelschwanzstücks (d) mechanisch auf dieses eine schräg seitlich und nach oben gerichtete Zugkraft ausübt.

4. Verfahren nach einem der Ansprüche 1 bis 3, gekennzeichnet durch die Tatsache, daß man ganz zu Beginn des Entbeinens die Lendenteile (a) und das Filet (c) ganz oder teilweise anhebt.

5. Verfahren nach einem der Ansprüche 1 bis 4, gekennzeichnet durch die Tatsache, daß man im Verlaufe des Loslösens des Knochengerüsts die Muskelmasse des Teils auf seiner Rückseite auf der Höhe des Kreuzbeins stützt.

6. Verfahren nach einem der Ansprüche 1 bis 5, gekennzeichnet durch die Tatsache, daß die mechanische Zugkraft, die auf das Schienbein zu Beginn der Phase des Lösens des Knochengerüsts ausgeübt wird, schräg seitlich nach unten gerichtet wird.

7. Vorrichtung, dazu bestimmt, das Entbeinen eines Schlachthinterteils zu erleichtern, gekennzeichnet durch die Tatsache, daß sie ein Fördersystem umfaßt, das geeignet ist, die Hinterteile (Q) nacheinander in aufgehängter Stellung zu einer Reihe von Arbeitsstellungen zu bringen, wobei letztere umfassen :

– eine erste Zubereitungsstelle (I), die mit einer Haltevorrichtung (1) versehen ist, die geeignet ist, gegen die äußere Seite des Teils (Q) zu drücken, um dieses während der Arbeit in einer im wesentlichen vertikalen Stellung zu halten ;

– eine zweite Zubereitungsstelle (II), die mit einer Haltevorrichtung (2) versehen ist, die geeignet ist, das Teil (Q) in eine halbhorizontale Stellung anzuheben und, es in dieser Stellung während der Arbeit zu halten ;

– eine dritte Zubereitungsstelle (III), die mit einer Haltevorrichtung (3) versehen ist, die geeignet ist, gegen die äußere Seite des Teils (Q) zu drücken, um es während der Arbeit in einer im wesentlichen vertikalen Stellung zu halten ;

– eine vierte Zubereitungsstelle (IV) zum Lösen des Knochengerüsts.

8. Vorrichtung nach Anspruch 7, gekennzeichnet durch die Tatsache, daß die Haltevorrichtung (1), die die erste Zubereitungsstelle (I) ausrüstet, die allgemeine Form einer Wiege besitzt, die eine gebogene Stange (11) umfaßt, die geeignet ist, sich gegen den oberen Teil des Schenkels des Teils (a) zu stützen.

9. Vorrichtung nach Anspruch 8, gekennzeichnet durch die Tatsache, daß die Haltevorrichtung (1) in der Form einer Wiege gelenkig aufgehängt ist, wobei ihre Hin- und Herbewegung durch einen Kolben (100) gesteuert wird.

10. Vorrichtung nach Anspruch 9, gekennzeichnet durch die Tatsache, daß der untere Teil (12) der Haltevorrichtung (1) selbst gelenkig mit dem oberen Teil verbunden ist, wobei dieser Teil mittels eines Kolbens (120) angehoben werden kann.

11. Vorrichtung nach einem der Ansprüche 7 bis 10, gekennzeichnet durch die Tastache, daß die Haltevorrichtung (2), die die zweite Zubereitungsstelle (II) ausrüstet, die allgemeine Form einer gelenkig aufgehängten Wiege (2) besitzt, deren Anhebebewegung von einem Kolben (200) gesteuert wird.

12. Vorrichtung nach Anspruch 11, dadurch gekennzeichnet, daß der untere Teil (23) der Haltevorrichtung (2) mit einer Blechplatte (22) versehen ist, die geeignet ist, das Teil (Q) auf der Höhe der Wirbelsäule zu halten.

13. Vorrichtung nach einem der Ansprüche 7 bis 11, gekennzeichnet durch die Tatsache, daß die Haltevorrichtung (3), die die zweite Zubereitungsstelle (III) ausrüstet, die allgemeine Form einer gelenkig aufgehängten Wiege (3) besitzt, deren Anhebebewegung von einem Kolben (300) gesteuert wird.

14. Vorrichtung nach Anspruch 13, gekennzeichnet durch die Tatsache, daß die Haltevorrichtung (3) ein gebogenes Stützelement (31), das geeignet ist, gegen die obere Seite des Schenkels des Teils (Q) zu drücken, und Arbeitsvorrichtungen umfaßt, die geeignet sind, gegen die andere Seite des Teils (Innenseite) zu drücken.

15. Vorrichtung nach Anspruch 15, gekennzeichnet durch die Tatsache, daß die Arbeitsvorrichtungen hin- und herbewegliche Elemente (32) sind, die von Kolben betätigt (323) werden.

16. Vorrichtung nach einem der Ansprüche 7 bis 15, gekennzeichnet durch die Tatsache, daß die Stelle (IV) zu Lösen des Knochengerüsts mit einer Loslövorrichtung (4) ausgestattet ist, die eine Zange (40) umfaßt, die von einem verformbaren Parallelogramm (41-42-43-410) getragen wird und von einem Kolben betätigt wird.

17. Vorrichtung nach Anspruch 16, gekennzeichnet durch die Tatsache, daß die Loslösestelle (IV) mit einer Stützvorrichtung (46) versehen ist, die geeignet ist, sich während des Loslösens des Knochengerüsts auf der Höhe des Kreuzbeins gegen das Teils (Q) zu stützen.

18. Vorrichtung nach einem der Ansprüche 7 bis 17, gekennzeichnet durch die Tatsache, daß das Fördersystem eine Rollbahn in der Luft umfaßt, die wenigstes eine Schiene, zum Beispiel ein Paar von leicht zur Horizontalen geneigten Schienen (5) umfaßt, wobei die Teile (Q) an Rollhaken (6) aufgehängt sind und sich durch die Schwerkraft entlang der Schienen bewegen können.

19. Vorrichtung nach Anspruch 18, gekennzeichnet durch die Tatsache, daß die Rollschiene in der Luft eine Unterbrechung an der dritten Zubereitungsstelle (III) aufweist, wobei diese Unterbrechung einer Anhebung des Niveaus der Schienen (5) entspricht, wobei ein hin- und herbewegliches Schienenstück (53) erlaubt, die Teile (Q) auf die Rollschiene dieser Stelle zu bringen.

**Claims**

1. A method for deboning the hind quarter of a carcase, in which :
   – when the quarter (Q) is suspended from a first hook (6) inserted in the gap (q) between the Achilles tendon (Q1) and the tibia, the muscular tissues are cut so as to at least partially release the ischium (e1), the ilium (e2) and the sacrum (f) and the backbone (k) is cut,
   – pieces such as the fillet (s) and the thick flank (t) are at least partially released and the quarter, which is still suspended from the said first hook (6), is lifted to place it in a semi-horizontal position in which the ribs (g) and the transverse apophyses of the lumbar vertebrae are sawn,
   – the quarter is suspended from a second hook (6') which is inserted in an opening (h) passing through the Achilles tendon, the quarter is released from the first hook and the knuckle (i) is cut across,
   – the muscular tissues are cut in such a way as to at least partly lift the top rump (d) and release the tibia (j), the knuckle joint and the femur (1),
   – with the quarter still suspended from the said second hook lateral traction is applied mechanically to the tibia, during which the bony support is progressively separated by cutting the muscular tissues associated with it from top to bottom.

2. A method according to claim 1, characterised in that the spine is cut after the lower part of the quarter has been raised in order to place it in an inclined position intermediate between the vertical and the horizontal.

3. A method according to either of claims 1 or 2, characterised in that when the top rump (d) is partly or completely lifted traction is applied thereto mechanically in an oblique lateral upwards direction.

4. A method according to one of claims 1 to 3, characterised in that the top of the sirloin (a) and the rump steak (c) are completely or partly raised right at the start of deboning.

5. A method according to one of claims 1 to 4, characterised in that the muscular mass of the quarter is supported on its dorsal side close to the sacrum while the bony support is being drawn out.

6. A method according to one of claims 1 to 5, characterised in that the mechanical force applied to the tibia at the start of the stage during which the bony support is drawn out is directed obliquely, laterally and downwards.

7. An installation intended to effect the deboning of the hind quarter of a carcase, characterised in that it includes a conveyor system designed to bring hind quarters (Q) in a suspended position successively to a number of work stations, which latter comprise :
- a first preparation station (I) which is equipped with a constraint device (1) constructed so as to bear against the outer side of the quarter (Q) in order to support it in a substantially vertical position while the work is being done,
- a second preparation station (II) which is equipped with a constraint device (2) constructed to lift the quarter (Q) into a semi-horizontal position and to support it in this position while work is in progress,
- a third preparation station (III) which is equipped with a constraint device (3) constructed to bear against the outer side of the quarter (Q) in order to support it in a substantially vertical position while work is in progress,
- a fourth station (IV) in which the bony support is drawn out.

8. An installation according to claim 7, characterised in that the constraint device (1) with which the first preparation station (I) is equipped has the general shape of a cradle comprising a bent supporting bar (11) which can be fitted against the upper part of the thigh of the quarter (a).

9. An installation according to claim 8, characterised in that the constraint device (1) in the form of a cradle is hinged, its tilting being controlled by a jack (100).

10. An installation according to claim 9, characterised in that the lower part (12) of the constraint device (1) is itself hinged with respect to the upper part, this part being capable of being lifted by means of a jack (120).

11. An installation according to one of claims 7-10, characterised in that the constraint device (2) with which the second preparation station (II) is fitted has the general shape of a hinged cradle (2), the lifting movement of which is controlled by a jack (200).

12. An installation according to claim 11 characterised in that the lower part (23) of the constraint device (2) is provided with a sheet metal plate (22) capable of supporting the quarter (Q) along the spine.

13. An installation according to one of claims 7 to 11, characterised in that the constraint device (3) of which the third preparation station is fitted (III) has the general shape of a hinged cradle (3), the pivoting movement of which is controlled by a jack (300).

14. An installation according to claim 13, characterised in that the constraint device (3) comprises a bone supporting member (31) which can bear against the upper surface of the thigh of the quarter (Q) and clamping means which can bear against the other side of the quarter (inside).

15. An installation according to claim 14, characterised in that the clamping means are pivoting members (32) activated by jacks (323).

16. An installation according to one of claims 7-15, characterised in that the station (IV) at which the bony support is drawn out is fitted with an extraction device (4) which comprises a jaw (40) borne by a deformable parallelogram (41-42-43-410) activated by a jack (45).

17. An installation according to claim 16, characterised in that the extraction station (IV) is equipped with means of support (46) which can bear against the sacrum of the quarter (Q) while the bony support is being drawn out.

18. An installation according to one of claims 7-17, characterised in that the conveyor system includes an aerial track comprising at least one rail, for example a pair of rails (5) which are slightly inclined with respect to the horizontal, the quarters (Q) being suspended from roller hooks (6) which can move along the said rails by gravity (5).

19. An installation according to claim 18, characterised in that the aerial trackway has an interruption at the third preparation station (III), this interruption corresponding to a rise in the level of the rails (5), a pivoting section of rail (53) being used to transfer the quarters (Q) onto the track at this station.

FIG.1

FIG.2

EP 0 300 940 B1

FIG.5A

221    22    220

23

FIG.3

100

1

120

12

Q

(I)

15

EP 0 300 940 B1

FIG.5

FIG.4

FIG_6

FIG_7

EP 0 300 940 B1

EP 0 300 940 B1

## FIG.8

31

3

## FIG.9

310

F

32b

323b

3

Q

323a

321a

32a

322a

310

320a

F

## FIG.10

45

410

7

411

5'

41

42

46

4

46'

40

43

(T)

(Ⅳ)

EP 0 300 940 B1

## FIG_11

## FIG_12

## FIG_13

FIG.14    FIG.14A    FIG.15    FIG.16

EP 0 300 940 B1